# EUROPEAN PATENT SPECIFICATION

(11) **EP 3 738 828 B1**
(45) Date of publication and mention of the grant of the patent: **27.03.2024**
(21) Application number: 20173468.8
(22) Date of filing: 07.05.2020
(51) Int. Cl.: B60P 7/13

(54) **FOLDABLE AUTOMATIC TWISTLOCK ARRANGEMENT**
KLAPPBARE AUTOMATISCHE DREHRIEGELUNGSVORRICHTUNG
AGENCEMENT DE VERROU ROTATIF AUTOMATIQUE PLIABLE

(30) Priority: 14.05.2019 AU 2019901635
(43) Date of publication of application: 18.11.2020
(73) Proprietor: Skrin Pty Ltd, South Yarra, Victoria 3141 (AU)
(72) Inventor: NYHOLM, Ture, South Yarra, Victoria 3141 (AU)
(74) Representative: ABG Intellectual Property Law, S.L.

(56) References cited:
- EP-A1- 2 708 416
- AU-A- 2 695 099
- AU-A- 2 695 199
- DE-U1-202009 016 268
- GB-A- 2 276 664
- US-A- 3 545 713
- US-A- 5 160 224

## Description

### FIELD OF THE INVENTION

The invention relates to a foldable automatic twistlock arrangement and in particular to an automatic twistlock that may be folded within a recess of a load surface of a railway wagon platform (rail wagon) and/or a container carrying trailer.

### BACKGROUND

Container locks, and more specifically twistlocks are used to fasten international shipping containers to a load surface of transport vehicles, such as ship or rail wagons and trailers. Also, where containers are stacked, twistlocks fasten adjacent containers on top of one another.

Twistlocks comprise a fastener housing for fitting between the container and a load surface of a container carrier vehicle, such as a railway wagon platform (rail wagon) and trailers, with a slot engaging portion that fits into the slot of a corner casting of the container, and a shaft adapted for rotation about a fastener housing, an enlarged elongate cone or locking head at one or both ends of the shaft is rotatable between a locked position and an unlocked position, such that in the locked position, portions of the cone overlap the slot of the corner casting to engage an inside of the corner casting to thereby hold the container. In the unlocked position the cone is aligned with the slot engaging portion of the fastener housing to enable it to pass through the slot, the shaft typically comprises a biasing (spring) means to bias the shaft to the locked position.

Twistlocks may be operated manually or may be semi-automatic or automatic. Automatic twistlocks have been developed such that the twistlock head (cone) has a bevelled upper side so that on placing the container on the twistlock head, the side of the slot urges the cone and hence the shaft to rotate against the action of the biasing means towards the disengaged position and thus allows entry into the corner casting.

Additionally, the automatic twistlock head includes a bevelled underside, so that the force of lifting the container urges edges of the slots to bear against the lower bevels to cause the twistlock head to rotate to the unlocked position thereby allowing for passage through the slot and thus out of the container.

Conventional twistlocks are large, bulky units that, due to their size, take up a considerable amount of room on the container bearing/loading surface of the container carrying wagon or trailer. Consequently, systems have been developed such that twistlocks may be folded or retracted within recesses located in the container bearing/loading surface of the container carrying wagon or trailer when not in use. US5160224, for example, describes a cam action twistlock assembly that lowers the base of a locking cone of the support assembly continuously down until the locking cone has rotated 90 degrees into a locking position within the container supports of the freight container. However, unfortunately these are limited to manually operated twistlocks, which limits their versatility.

AU2695099 describes a foldable automatic twistlock arrangement for connecting a container to a load surface, in which twistlock includes a mounting leg that rotatably connects to a guiding shaft located under the load surface to allow the automatic twistlock to rotate about the guiding shaft between a docking position and a removal position, where it can be moved away from the load surface.

US 3 545 713 A discloses a foldable automatic twistlock arrangement for connecting a container to a load surface according to the preamble of claim 1.

### OBJECT OF THE INVENTION

It is an object of the invention to overcome, or at least substantially ameliorate, the disadvantages and shortcomings of the prior art.

Other objects and advantages of the present invention will become apparent from the following description, taken in connection with the accompanying drawings, wherein by way of illustration and example, certain embodiments of the present invention are disclosed.

### SUMMARY OF THE INVENTION

According to the present invention, there is provided a foldable automatic twistlock arrangement for connecting a container to a load surface of a rail wagon or a trailer, wherein the foldable automatic twistlock arrangement includes:
an automatic twistlock having a fastener element, the fastener element including a rotatable fastener shaft with a twistlock head,
   wherein the fastener element is adapted to be operable between a locked position and an unlocked position when brought into contact with the container,
   a housing unit including a base plate, the base plate having a top surface, wherein the fastener element is positioned within the housing unit and extends substantially outwardly from the top surface of the base plate, and
a hinge arrangement adapted to reversibly fold the base plate from an open position to a closed position, wherein the open position is characterised in that the automatic twistlock extends above the load surface of the rail wagon or trailer so that it may engage with the container, and the closed position is characterised in that the automatic twistlock is received within a recess located within the load surface of the rail wagon or trailer.

In the present invention, the hinge arrangement includes one or more knuckles located at a first end of the base plate and a pivot pin about which the one or more knuckles may rotate.

In preference, the one or more knuckles and the base plate are integrally formed.

In the present invention the foldable automatic container lock further includes a locking means adapted to lock the base plate of the housing in the open position.

In the present invention, the locking means includes one or more locking bolts.

In preference, the locking bolts include a pair of locking handles.

In preference, each of the locking bolts is slidingly received within the base plate and extends longitudinally therethrough.

In preference, each of the locking bolts is spring loaded.

In the present invention, each of the locking bolts includes an handle end and a locking end, wherein the handle end extends outwardly from the first end of the base plate and the locking end extends outwardly from a second end of the base plate.

In preference, wherein the handle end of each of the locking bolts is movable by a user from a first position, wherein the locking end of the locking bolt is received within a corresponding opening in the recess of the rail wagon or trailer, and which locks the base plate in the open position, to a second position wherein the handle end is slid towards the first end of the base plate to retract the locking end from the corresponding opening in the recess and rotated such that the handle end is held in the open position and wherein the base plate is then free to be folded.

In preference, the pair of locking bolts are positioned on opposing sides of the base plate.

In preference, each of the locking handles is L-shaped.

In order to now describe the invention in greater detail a series of preferred embodiments will be presented with the assistance of the following illustrations and accompanying text.

### SUMMARY OF THE DRAWINGS

Figure 1 is a perspective view of a foldable automatic container lock in a preferred embodiment of the invention.
Figure 2 is a top view of a foldable automatic container lock in a preferred embodiment of the invention.
Figure 3 is a rear view of a foldable automatic container lock in a preferred embodiment of the invention.
Figure 4 is a side view of a foldable automatic container lock in a preferred embodiment of the invention.
Figure 5 is a perspective view of a foldable automatic container lock in an alternative preferred embodiment of the invention;

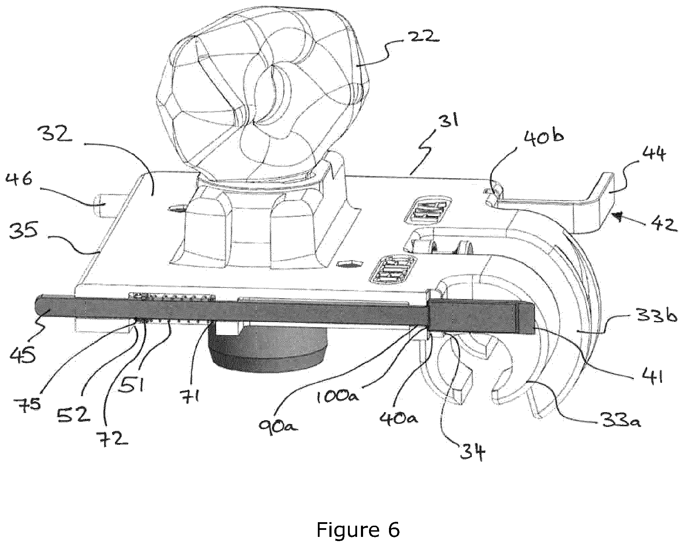

Figure 6 is a cross section view of the present invention along A-A of figure 2, showing the locking bolt in the locking position.

### DETAILED DESCRIPTION OF THE INVENTION

The following description will describe several embodiments of the present invention.

The foldable automatic twistlock arrangement of a preferred embodiment is shown generally as (10).

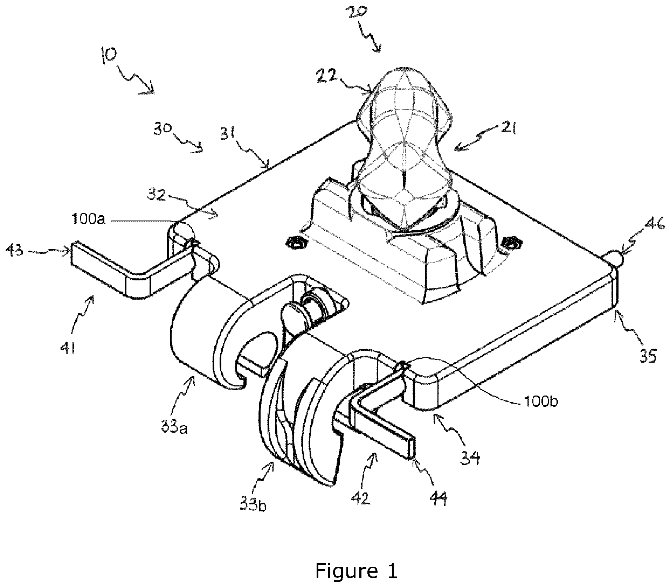

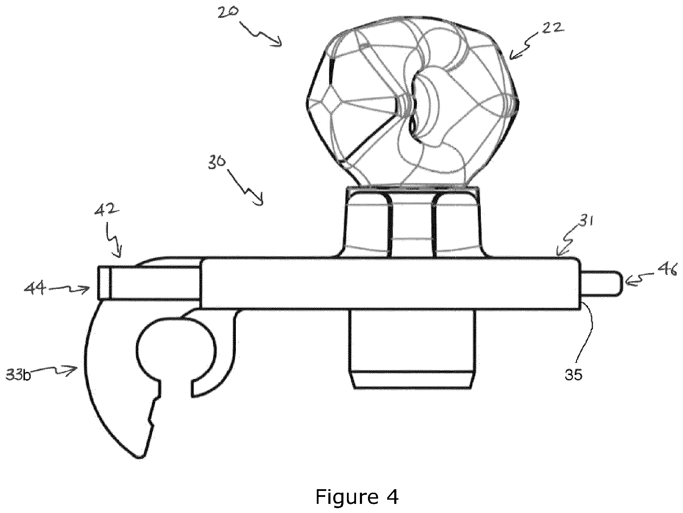

In particular, Figures 1 to 4 show an embodiment of the foldable automatic twistlock arrangement (10) of the present invention, which includes an automatic twistlock (20). Automatic twistlocks, as shown in Figures 1 to 4, generally include a fastener element (21) including a rotatable fastener shaft (not shown) and twistlock head (22), also known as a cone. The twistlock head (22) has a bevelled upper side so that when placing a container (not shown) on the twistlock head, the side of a slot on the container urges the cone and hence the shaft to rotate against the action of the biasing means towards the disengaged position and thus allows entry into the corner casting. Additionally, the automatic twistlock head (22) includes a bevelled underside, so that the force of lifting the container urges edges of the container slots to bear against the lower bevels to cause the twistlock head (22) to rotate to the unlocked position thereby allowing for passage through the slot and thus out of the container. A spring biasing means is generally employed to effect rotation of the automatic twistlock (20) between the locked and unlocked positions.

The foldable automatic twistlock arrangement (10) of the present invention further includes a housing unit (30) having a base plate (31), with the base plate (31) having a top surface (32). The fastener element (21) of the automatic twistlock (20) is positioned within the housing (30) and extends substantially outwardly from the top surface (32) of the base plate (31), so that it may engage with a corresponding slot of a container when in use (not shown).

Conveniently, the foldable automatic twistlock arrangement (10) of the present invention includes a hinge arrangement adapted to reversibly fold the base plate (31) from an open position to a closed position. When in the open position, the automatic twistlock (20) extends above a load surface of a rail wagon or trailer (not shown), which allows for interaction with a container to engage with a suitably shaped opening to secure it to the load surface of the rail wagon or trailer. When not in use, the base plate (31) may be folded to the closed position in which the automatic twistlock (20) is received within a recess located within the load surface of the rail wagon or trailer (not shown). Thus, an advantage of the present invention includes that, when not in use, the automatic twistlock (20) may be folded away and the load surface of the rail wagon or trailer will no longer be encumbered with the bulky automatic twistlock (20).

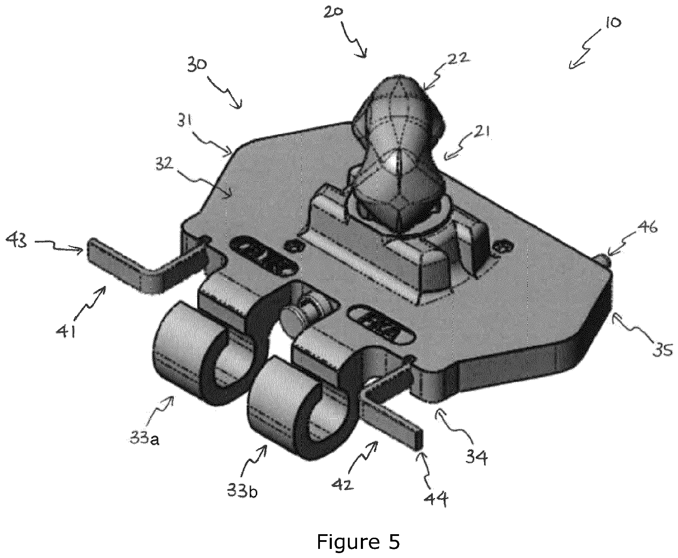

The hinge arrangement employed may include any such means that would be known to those skilled in the art that allows for folding the base plate (31) from an open position to a closed position and vice versa. In the embodiment shown in Figures 1 to 4, the hinge arrangement includes one or more knuckles (33a, 33b) located at a first end (34) of the base plate (31). The one or more knuckles (33) may be formed separately and connected to the base plate (31) by any means known to those skilled in the art. Alternatively, the knuckles (33) and the base plate (31) may be integrally formed, as shown in Figures 1 to 4. The hinge assembly further includes a pivot pin (not shown), which extends through the knuckle arrangement and may be appropriately connected to the container bearing load surface of the container carrying rail wagon or trailer, such that the base plate may rotate between the open and closed positions. Further, in the embodiment shown in Figures 1 to 4, a pair of knuckles are oriented such that the openings for receiving the pivot pins are located on the underside of the arrangement (10). Alternatively, in Figure 5 an alternative embodiment is illustrated whereby the knuckles are oriented such that openings for receiving the pivot pins are located on the upper side of the arrangement (10).

Advantageously, the present invention may be used for supporting and securing containers on railway wagon platforms (rail wagons), but would also equally find use for supporting and securing containers on the trailers of other vehicles. In addition, the present invention provides a twistlock arrangement that allows for simple and reliable automatic locking and unlocking of a container without the need for manual handling of the lock components. This has been adapted to couple with a folding arrangement whereby the automatic twistlock (20) may be concealed within a recess of the container loading surface to prevent the twistlock from taking up a considerable amount of room on the container bearing/loading surface of the container carrying wagon or trailer when the automatic twistlock (20) is not in use.

According to the present invention the foldable automatic twistlock arrangement (10) further includes a locking means adapted to lock the base plate (31) of the housing (30) in the open position. The locking means may include any such means for locking the base plate (31) that are known to those skilled in the art.

As shown in Figures 1 to 4, the locking means is a pair of locking bolts that includes a pair of locking bolts (41, 42) with locking handles (43, 44) that are positioned on opposing sides of the base plate (31). However, any number of locking bolts and different shapes of locking handles may be used and positioned so that the locking function may be performed. In the particular, embodiment shown, the locking bolts (41, 42) are slidingly received within the base plate (31) and extend longitudinally therethrough. More particularly, the locking bolts are slidingly received within channels (90a) that extend longitudinally through the base plate (31) Channel 90b on the other side of the base plate (31) not shown..

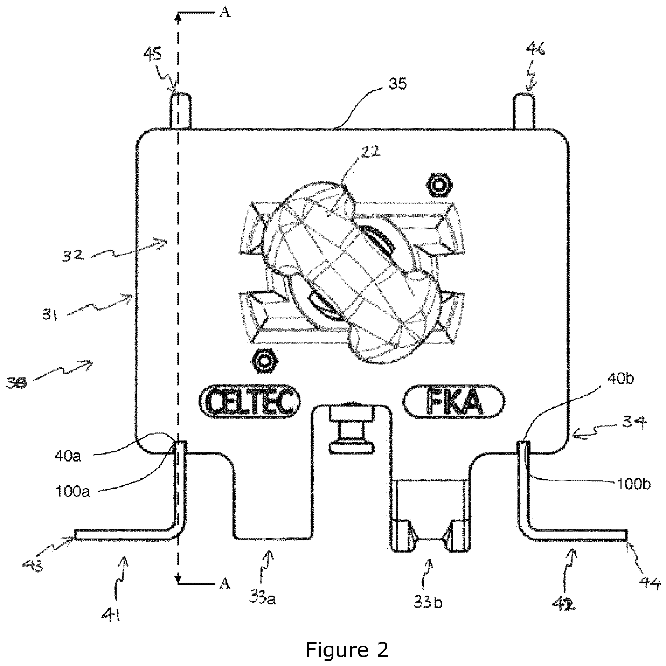

The locking bolts (41, 42) are spring loaded, wherein each of the locking bolts (41, 42) and biased by the spring (51), located in the recess (52) of the base plate (31), in a locking position whereby the locking ends (45, 46) protrude out of the rear side (55) of the base plate (31). The spring (51) surrounds the bolt (41) and is held between two washers (71, 72), a screw fastener (75) abuts the washer (72). The locking bolts (41, 42) further include handle ends (43, 44), which extend outwardly from the recessed slots (40a, 40b) on the first end (34) of the base plate (31), which can also be seen in Figure 2, and the locking ends (45, 46)extend outwardly from a second end (35) of the base plate (31).

With the locking bolts (41, 42) in the locking position, the locking ends (45, 46) protrude outwardly and into aligned apertures located in a side of the recess of the rail wagon or trailer (not shown) that is shaped to receive the foldable twist lock.

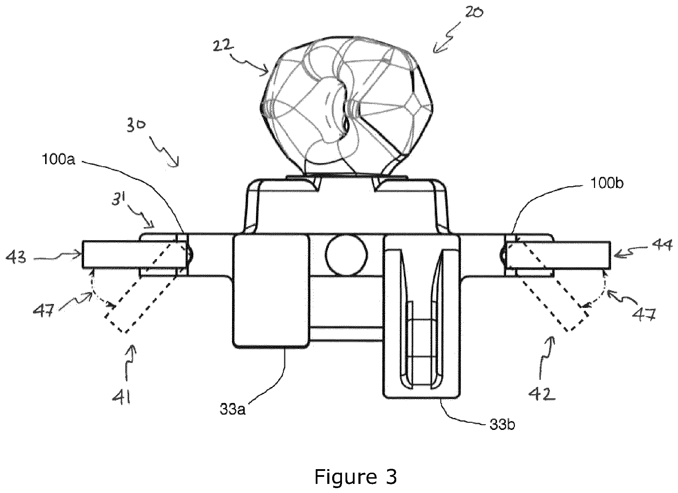

Referring to Figure 3, when in use and the base plate (31) is in the open position, the handle ends (43, 44) of the locking bolts (41, 42) are in a first position, characterised in that the locking end (45, 46) nests within a corresponding aperture of the recess of the load surface of the rail wagon or trailer, which locks the base plate (31) in the open position. The locking bolts (41, 42) can then be engaged or operated and moved by an operator pulling on the locking arms (43, 44) which then pulls the locking ends (45, 46) of the locking bolts (41, 42) out of the respective openings in the recess of the of the rail wagon or trailer. This results in the spring (51) being compressed within the recess (52). The locking arms (43, 44) then clear the slots (40a, 40b) and rotated (shown by way of arrows (47) such that the so that the shoulders (100a, 100b) of the handle ends (43, 44) is then overlapping with the outer surface (34) so as to prevent the locking ends (45, 46) from projecting out from the second end (35) retain the locking bolts in the open position. This results in the locking ends (45, 46) no longer projecting outwards and thus the base plate (31) is then free to be folded between the open and closed positions.

When the locking bolts (41, 42) are rotated to align the shoulders (100a, 100b) with the slots (40a, 40b), the locking bolts (41, 42) will then return to the first position by virtue of the spring-loaded mechanism, thereby locking the base plate (31) in the open position again with the twistlock head (22) in the upright position ready for engagement with a container.

Advantageously, the locking means allows for the foldable automatic twistlock arrangement (10) to be secured when it is in the open position and being used to lock and release containers, which prevents any undesired movement of the foldable automatic twistlock arrangement (10). Another advantage of the locking means is that it may be operated quickly and efficiently by a single user. makes available an alternative to existing twistlock arrangements, which is simple and convenient to operate and combines the benefits of automatic twistlocks with the ability to fold the foldable automatic twistlock arrangement (10) within the load surface of a rail wagon or trailer when they are not in use.

## Claims

1. A foldable automatic twistlock arrangement (10) for connecting a container to a load surface of a rail wagon or a trailer, wherein the foldable automatic twistlock arrangement (10) comprises:
an automatic twistlock (20) having a fastener element (21), the fastener element (21) comprising a rotatable fastener shaft with a twistlock head (22),
wherein the fastener element (21) is adapted to be operable between a locked position and an unlocked position when brought into contact with the container,
a housing unit (30) comprising a base plate (31), the base plate (31) having a top surface (32),
wherein the fastener element (21) is positioned within the housing unit (30) and extends substantially outwardly from the top surface (32) of the base plate (31), and
a hinge arrangement adapted to reversibly fold the base plate (31) from an open position to a closed position,
wherein, in the open position, the automatic twistlock (20) extends above the load surface of the rail wagon or trailer so that it may interact with the container or engage with the container, and wherein, in the closed position, the automatic twistlock (20) is received within a recess located within the load surface of the rail wagon or trailer,
a locking means adapted to lock the base plate (31) of the housing (30) in the open position wherein the locking means comprises one or more locking bolts (41, 42),
wherein
the hinge arrangement comprises one or more knuckles (33a, 33b) located at a first end of the base plate (31) and a pivot pin about which the one or more knuckles (33a, 33b) may rotate, **characterised in that** each of the locking bolts (41, 42) comprise a handle end and a locking end, wherein the handle end extends outwardly from the first end of the base plate (31) and the locking end extends outwardly from a second end of the base plate (31).

2. The foldable automatic twistlock arrangement (10) of claim 1, wherein the one or more knuckles (33a, 33b) and the base plate (31) are integrally formed.

3. The foldable automatic twistlock arrangement (10) of claim 2, wherein the locking means comprises a pair of locking bolts (41, 42).

4. The foldable automatic twistlock arrangement (10) of claim 3, wherein each of the locking bolts (41, 42) is slidingly received within the base plate (31) and extends longitudinally therethrough.

5. The foldable automatic twistlock arrangement (10) of any one of claims 3 or 4, wherein each of the locking bolts (41, 42) are spring loaded.

6. The foldable automatic twistlock arrangement (10) of claim 1, wherein the handle end of each of the locking bolts (41, 42) is movable by a user from a first position, wherein the locking end of the locking bolt (41, 42) is received within a corresponding opening in the recess of the rail wagon or trailer, and which locks the base plate (31) in the open position, to a second position wherein the handle end is slid towards the first end of the base plate (31) to retract the locking end from the corresponding opening in the recess and rotated such that the handle end is held in the open position and wherein the base plate (31) is then free to be folded.

7. The foldable automatic twistlock arrangement (10) of claim 6, wherein the handle end comprises a shoulder section.

8. The foldable automatic twistlock arrangement (10) of any one of the above claims, wherein the base plate (31) is shaped to nest within the recess of a load surface of a railway wagon platform (rail wagon) and/or a container carrying trailer.

9. The foldable automatic twistlock arrangement (10) of claim 6, wherein the shoulder of the handle end abuts an outer surface of the base plate (31) holding the handle in the open position.

10. The foldable automatic twistlock arrangement (10) according to any one of claims 1 to 6, wherein the locking bolts (41, 42) are positioned on opposing sides of the base plate (31).

11. The foldable automatic twistlock arrangement (10) of any one of claims 1 to 7, wherein each of the locking bolts (41, 42) is an L-shaped locking bolt.

## Patentansprüche

1. Faltbare automatische Twistlock-Anordnung (10) zum Verbinden eines Containers mit einer Ladeoberfläche eines Eisenbahnwagens oder eines Anhängers, wobei die faltbare automatische Twistlock-Anordnung (10) aufweist:
einen automatischen Twistlock (20) mit einem Befestigungselement (21), wobei das Befestigungselement (21) eine drehbare Befestigungswelle mit einem Twistlock-Kopf (22) aufweist,
wobei das Befestigungselement (21) dazu ausgebildet ist, zwischen einer verriegelten Position und einer entriegelten Position betreibbar zu sein, wenn es in Kontakt mit dem Container gebracht wird,
eine Gehäuseeinheit (30), die eine Basisplatte (31) aufweist, wobei die Basisplatte (31) eine obere Oberfläche (32) aufweist,
wobei das Befestigungselement (21) innerhalb der Gehäuseeinheit (30) positioniert ist und sich im Wesentlichen von der oberen Oberfläche (32) der Basisplatte (31) nach außen erstreckt, und
eine Scharnieranordnung, die dazu ausgebildet ist, die Basisplatte (31) reversibel von einer Offenposition in eine Geschlossenposition zu falten,
wobei sich das automatische Twistlock (20) in der Offenposition über die Ladeoberfläche des Eisenbahnwagens oder Anhängers erstreckt, so dass es mit dem Container zusammenwirken oder mit dem Container in Eingriff kommen kann, und wobei, in der Geschlossenposition, das automatische Twistlock (20) innerhalb einer Aussparung aufgenommen ist, die innerhalb der Ladeoberfläche des Eisenbahnwagens oder Anhängers angeordnet ist,
ein Verriegelungsmittel, das dazu ausgebildet ist, die Basisplatte (31) des Gehäuses (30) in der Offenposition zu verriegeln, wobei das Verriegelungsmittel einen oder mehrere Verriegelungsbolzen (41, 42) aufweist,
wobei
die Scharnieranordnung ein oder mehrere an einem ersten Ende der Basisplatte (31) angeordnete Gelenke (33a, 33b) und einen Drehzapfen, um den sich das eine oder die mehreren Gelenke (33a, 33b) drehen können, aufweist, **dadurch gekennzeichnet, dass** jeder der Verriegelungsbolzen (41, 42) ein Griffende und ein Verriegelungsende aufweist, wobei sich das Griffende von dem ersten Ende der Basisplatte (31) nach außen erstreckt und das Verriegelungsende von einem zweiten Ende der Basisplatte (31) nach außen erstreckt.

2. Faltbare automatische Twistlock-Anordnung (10) nach Anspruch 1, wobei das eine oder die mehreren Gelenke (33a, 33b) und die Basisplatte (31) integral ausgebildet sind.

3. Faltbare automatische Twistlock-Anordnung (10) nach Anspruch 2, wobei das Verriegelungsmittel ein Paar Verriegelungsbolzen (41, 42) aufweist.

4. Faltbare automatische Twistlock-Anordnung (10) nach Anspruch 3, wobei jeder der Verriegelungsbolzen (41, 42) verschiebbar innerhalb der Basisplatte (31) aufgenommen ist und sich longitudinal durch diese hindurch erstreckt.

5. Faltbare automatische Twistlock-Anordnung (10) nach einem der Ansprüche 3 oder 4, wobei jeder der Verriegelungsbolzen (41, 42) federbelastet ist.

6. Faltbare automatische Twistlock-Anordnung (10) nach Anspruch 1, wobei das Griffende jedes der Verriegelungsbolzen (41, 42) durch einen Benutzer von einer ersten Position, in der das Verriegelungsende des Verriegelungsbolzens (41, 42) in einer entsprechenden Öffnung in der Aussparung des Schienenwagens oder Anhängers aufgenommen ist, und wodurch die Basisplatte (31) in der Offenposition verriegelt ist, in eine zweite Position bewegbar ist, in der das Griffende in Richtung des ersten Endes der Basisplatte (31) verschoben ist, um das Verriegelungsende aus der entsprechenden Öffnung in der Aussparung zurückzuziehen, und derart gedreht ist, dass das Griffende in der Offenposition gehalten ist und wobei die Basisplatte (31) dann frei ist, um gefaltet zu werden.

7. Faltbare automatische Twistlock-Anordnung (10) nach Anspruch 6, wobei das Griffende einen Schulterabschnitt aufweist.

8. Faltbare automatische Twistlock-Anordnung (10) nach einem der vorhergehenden Ansprüche, wobei die Basisplatte (31) dazu ausgebildet ist, sich in die Aussparung einer Ladeoberfläche einer Eisenbahnwagenplattform (Eisenbahnwagen) und/oder eines Containertraganhängers einzufügen.

9. Faltbare automatische Twistlock-Anordnung (10) nach Anspruch 6, wobei die Schulter des Griffendes an einer äußeren Oberfläche der Basisplatte (31) anliegt, wodurch der Griff in der Offenposition gehalten wird.

10. Faltbare automatische Twistlock-Anordnung (10) nach einem der Ansprüche 1 bis 6, wobei die Verriegelungsbolzen (41, 42) auf gegenüberliegenden Seiten der Basisplatte (31) positioniert sind.

11. Faltbare automatische Twistlock-Anordnung (10) nach einem der Ansprüche 1 bis 7, wobei jeder der Verriegelungsbolzen (41, 42) ein L-förmiger Verriegelungsbolzen ist.

## Revendications

1. Agencement de verrou tournant automatique rabattable (10) pour attacher un conteneur à une surface de charge d'un wagon ou d'une remorque, dans lequel l'agencement de verrou tournant automatique rabattable (10) comporte :
un verrou tournant automatique (20) ayant un élément de fixation (21), l'élément de fixation (21) comportant un axe de fixation rotatif muni d'une tête de verrou tournant (22),
dans lequel l'élément de fixation (21) est adapté pour pouvoir être manoeuvré entre une position verrouillée et une position déverrouillée lorsqu'il est mis en contact avec le conteneur,
une unité de boîtier (30) comportant une plaque de base (31), la plaque de base (31) ayant une surface supérieure (32),
dans lequel l'élément de fixation (21) est positionné à l'intérieur de l'unité de boîtier (30) et s'étend sensiblement vers l'extérieur depuis la surface supérieure (32) de la plaque de base (31), et
un agencement articulé adapté pour rabattre la plaque de base (31) de manière réversible d'une position ouverte à une position fermée,
dans lequel, dans la position ouverte, le verrou tournant automatique (20) s'étend au-dessus de la surface de charge du wagon ou de la remorque de sorte qu'il peut interagir avec le conteneur ou venir en prise avec le conteneur, et dans lequel, dans la position fermée, le verrou tournant automatique (20) est reçu à l'intérieur d'un évidement situé à l'intérieur de la surface de charge du wagon ou de la remorque,
des moyens de verrouillage adaptés pour verrouiller la plaque de base (31) de l'unité de boîtier (30) dans la position ouverte, les moyens de verrouillage comportant un ou plusieurs ergots de verrouillage (41, 42),
dans lequel l'agencement articulé comporte une ou plusieurs charnières (33a, 33b) situées à une première extrémité de la plaque de base (31) et un axe de pivotement autour duquel la ou les charnières (33a, 33b) peuvent tourner,
**caractérisé en ce que** chacun des ergots de verrouillage (41, 42) comporte une extrémité de poignée et une extrémité de verrouillage,
dans lequel l'extrémité de poignée s'étend vers l'extérieur à partir de la première extrémité de la plaque de base (31) et l'extrémité de verrouillage s'étend vers l'extérieur à partir d'une seconde extrémité de la plaque de base (31).

2. Agencement de verrou tournant automatique rabattable (10) selon la revendication 1, dans lequel la ou les charnières (33a, 33b) et la plaque de base (31) sont formées d'un seul tenant.

3. Agencement de verrou tournant automatique rabattable (10) selon la revendication 2, dans lequel les moyens de verrouillage comportent une paire d'ergots de verrouillage (41, 42).

4. Agencement de verrou tournant automatique rabattable (10) selon la revendication 3, dans lequel chacun des ergots de verrouillage (41, 42) est reçu de manière coulissante à l'intérieur de la plaque de base (31) et s'étend longitudinalement à travers celle-ci.

5. Agencement de verrou tournant automatique rabattable (10) selon l'une quelconque des revendications 3 ou 4, dans lequel chacun des ergots de verrouillage (41, 42) est chargé par ressort.

6. Agencement de verrou tournant automatique rabattable (10) selon la revendication 1, dans lequel l'extrémité de poignée de chacun des ergots de verrouillage (41, 42) peut être déplacée par un utilisateur d'une première position, dans laquelle l'extrémité de verrouillage de l'ergot de verrouillage (41, 42) est reçue à l'intérieur d'une ouverture correspondante dans l'évidement du wagon ou de la remorque, et qui verrouille la plaque de base (31) dans la position ouverte, à une seconde position dans laquelle l'extrémité de poignée est glissée vers la première extrémité de la plaque de base (31) pour rétracter l'extrémité de verrouillage à partir de l'ouverture correspondante dans l'évidement et tournée de telle sorte que l'extrémité de poignée est maintenue dans la position ouverte et dans laquelle la plaque de base (31) est ensuite libre d'être rabattue.

7. Agencement de verrou tournant automatique rabattable (10) selon la revendication 6, dans lequel l'extrémité de poignée comporte une section d'épaulement.

8. Agencement de verrou tournant automatique rabattable (10) selon l'une quelconque des revendications ci-dessus, dans lequel la plaque de base (31) est formée pour s'imbriquer à l'intérieur de l'évidement d'une surface de charge d'une plate-forme de wagon (wagon ferroviaire) et/ou d'une remorque de transport de conteneur.

9. Agencement de verrou tournant automatique rabattable (10) selon la revendication 6, dans lequel l'épaulement de l'extrémité de poignée vient en butée contre une surface extérieure de la plaque de base (31) maintenant la poignée dans la position ouverte.

10. Agencement de verrou tournant automatique rabattable (10) selon l'une quelconque des revendications 1 à 6, dans lequel les ergots de verrouillage (41, 42) sont positionnés sur des côtés opposés de la plaque de base (31).

11. Agencement de verrou tournant automatique rabattable (10) selon l'une quelconque des revendications 1 à 7, dans lequel chacun des ergots de verrouillage (41, 42) est un ergot de verrouillage en forme de L.
